# EUROPÄISCHE PATENTANMELDUNG

(11) **EP 0 921 324 A1**
(43) Veröffentlichungstag der Anmeldung: **09.06.1999**
(21) Anmeldenummer: 98102496.1
(22) Anmeldetag: 13.02.1998
(51) Int. Cl.: F16B 13/00

(54) **Vorrichtung zur Befestigung von Wandhalterungen**

(30) Priorität: 05.12.1997 DE 29721396 U
(71) Anmelder: Kollinger Metallbau GmbH, 87749 Hawangen (DE)
(72) Erfinder: Kollinger, Franz, 87700 Memmingen (DE)
(74) Vertreter: Pfister, Helmut, Dipl.-Ing.

(57) **Zusammenfassung**

Die Vorrichtung besteht im wesentlichen aus zwei Teilen. Der erste Teil (1) ist rohrförmig und besitzt eine Ausnehmung die den Teil (2) aufnimmt, in den die Wandhalterung (24) eingreift, die mit dem Teil (2) fest verbunden ist. Es ist eine selbsthemmende Keilverbindung vorgesehen. Der rohrförmige Teil (2) besitzt hierzu eine U-förmige Ausnehmung (22), deren Innenflächen mit dem Umfang eines Querbolzens (14) zusammenwirken, der im Teil (1) gehalten ist. Die U-förmige Ausnehmung (22) ist leicht konisch gestaltet.

## Beschreibung

Die Erfindung betrifft eine Vorrichtung zur Befestigung von Wandhalterungen, im wesentlichen bestehend aus zwei Teilen, wobei der erste Teil in einer Bohrung der Wand fixiert ist und der zweite Teil klemmend aber lösbar in einer Ausnehmung des ersten Teils gehalten ist und die Halterung trägt.

Beispielsweise im Ladenbau, aber auch für Wohnungsausstattungen sind Wandhalterungen bekannt, die im wesentlichen aus zwei Teilen bestehen. Der eine Teil wird in einer Wand, zum Beispiel einer Möbelwand, einer Gestellwand oder auch an einer Zimmerwand befestigt. In dieses in der Wand befestigte Teil, wird ein weiteres Teil eingesteckt, und zwar derart, daß dieses zweite, eingesteckte Teil fest mit dem ersten Teil verbunden ist. Die Anordnung ist dabei derart getroffen, daß es immer möglich ist, dieses zweiten Teil vom ersten Teil zu trennen. Der einsteckbare zweite Teil kann beispielsweise dazu dienen, ein Regalbrett oder dergleichen zu tragen. Es können auch Kleiderbügel an dem zweiten Teil aufgehängt werden. Da der zweite Teil im ersten Teil lösbar gehalten ist, ist es leicht möglich, eine einmal getroffene Anordnung abzuändern, was bei der Raumausstattung, im Ladenbau usw., Vorteile bietet.

In der OE-PS 32 92 46 ist eine Vorrichtung beschrieben, bei der in eine entsprechend dimensionierte Bohrung einer Wand ein dübelartiges Rohrstück eingesetzt bzw. eingeschlagen wird, das dann durch das Einsetzen des zweiten Teiles aufgeweitet wird. Wohl ist es grundsätzlich möglich, daß derartige Befestigungen wieder gelöst werden. Die Aufweitung des Dübels hat aber den Nachteil, daß der sichere Halt des Dübels im Bohrloch gemindert wird. Bei häufigem Wechsel des in den ersten Teil einsteckbaren zweiten Teils ist ein sicherer Zusammenhalt der einzelnen Teile in der Wand nicht mehr gewährleistet.

Der Erfindung liegt die Aufgabe zugrunde, eine Vorrichtung zur Befestigung von Wandhalterungen der eingangs angegebenen Gattung zu schaffen und zu verbessern, die beliebig häufiges Herausnehmen des zweiten Teils aus dem ersten Teil zuläßt und wobei nach dem Wiedereinfügen immer ein sicherer Zusammenhalt der einzelnen Bauteile gewährleistet ist. Ein weiteres Ziel der Erfindung besteht in einer möglichst einfachen Ausbildung, die eine kostengünstige Herstellung erlaubt.

Die erfindungsgemäße Lösung geht aus von der Vorrichtung der eingangs angegebenen Gattung. Erfindungsgemäß wird vorgeschlagen, daß zwischen den beiden Teilen eine selbsthemmende Keilverbindung vorgesehen ist, wobei an dem einen Teil mindestens eine Keilfläche angeordnet ist, die sich an einer Gegenfläche des anderen Teils verklemmt und wobei der erste Teil beim Klemmvorgang in seinen Außenabmessungen im wesentlichen unverformt bleibt.

Die erfindungsgemäße Vorrichtung hat den Vorteil, daß die Haltekräfte zwischen den beiden Teilen allein durch die Ausbildung der Keilverbindung bestimmt wird. Sie hängt nicht davon ab, aus welchem Werkstoff die Wand besteht bzw. wie exakt die Bohrung gestaltet ist, in die der erste Teil zu fixieren ist. Auf diese Weise wird auch möglich, daß die beiden Teile praktisch beliebig oft zusammengefügt und wieder getrennt werden können.

Die Haltekraft wird jeweils dadurch bestimmt, welche Kraft beim Zusammenfügen auf die Keilverbindung ausgeübt wird. Erfolgt das Zusammenfügen mit leichtem Handschlag, ist auch die Trennung leicht durchzuführen. Wird dagegen beim Zusammenfügen der zweite Teil mittels eines Hammers eingetrieben, sind auch beim Trennen höhere Kräfte aufzuwenden.

Die Keilfläche wird vorzugsweise von der Innenfläche einer U-förmigen Ausnehmung an dem einen Teil gebildet, die mit einem Querbolzen am anderen Teil zusammenwirkt. Dabei kann beispielsweise die Keilfläche am ersten Teil angeformt sein, während der Querbolzen Element des zweiten Teils ist.

Besser ist es jedoch, wenn die Keilfläche am zweiten Teil und die Gegenfläche am ersten Teil angeordnet ist.

Eine besonders vorteilhafte Ausgestaltung ergibt sich, wenn der in der Ausnehmung des ersten Teils einsteckbare zweite Teil rohrförmig gestaltet ist. Die Rohrform des zweiten Teils kann dann dazu benützt werden, beispielsweise die Halterung zu tragen.

In einer weiteren Ausgestaltung der Erfindung ist vorgesehen, daß der erste Teil am Einsteckende ein Schild aufweist, das zur Befestigung des ersten Teils mit einer Befestigungsplatte zusammenwirkt, die zur Montage auf dem ersten Teil verschiebbar ist. Auf diese Weise kann die erfindungsgemäße Vorrichtung beispielsweise an einer Möbelwand gehalten werden oder auch an einer verhältnismäßig dünnen Trenn- oder Zwischenwand.

Insbesondere schlägt die Erfindung vor, daß der Querbolzen mit seinen Enden aus dem ersten Teil herausragt um eine Abstützung für die Befestigungsplatte zu bilden. Eine solche Bauweise hat den Vorteil, daß die bei der Herstellung oder Lösung der Klemmverbindung auftretenden Kräfte direkt in die Wand weitergeleitet werden und die Belastung der einzelnen Teile der Vorrichtung gering bleiben.

Günstig ist es hierbei, wenn Gewindebolzen benutzt werden, die sich zwischen dem Querbolzen und der Befestigungsplatte erstrecken. Auf diese Weise kann die Vorrichtung leicht unterschiedlichen Stärken der Wand angepaßt werden, an der die Vorrichtung befestigt werden soll.

Die Ausnehmung im ersten Teil ist vorzugsweise als Bohrung gestaltet und weist einzelne Abschnitte mit geringeren dem zweiten Teil angepaßten Durchmesser auf. Der zweite Teil wird also nur von einigen Stellen des ersten Teils getragen. Dies erleichtert wesentlich die genaue Herstellung der Teile. Der Querbolzen wird vorzugsweise im Bereich eines Abschnittes der Innenbohrung angeordnet, die einen etwas größeren Durchmesser aufweist. Dadurch läßt sich vermeiden, daß auch bei der Anwendung geringer Wandstärken ungewollte Verklemmungen auftreten.

In der Zeichnung sind einige Ausführungsbeispiele, mit weiteren vorteilhaften und erfinderischen Merkmalen, schematisch dargestellt.

Es zeigen:
- Fig. 1: eine Seitenansicht einer erfindungsgemäßen Vorrichtung im montierten Zustand, wobei einige Teile zur Verbesserung der Deutlichkeit weggelassen sind,
- Fig. 2: eine Seitenansicht, teilweise im Schnitt des ersten Teils der erfindungsgemäßen Vorrichtung,
- Fig. 3: eine Seitenansicht, teilweise im Schnitt des zweiten Teils der erfindungsgemäßen Vorrichtung,
- Fig. 4: eine Frontansicht des ersten Teils,
- Fig. 5: eine Seitenansicht des ersten Teils, wobei einige Teile zur Verbesserung der Deutlichkeit weggelassen sind,
- Fig. 6: eine Draufsicht auf den kompletten ersten Teil,
- Fig. 7 und 8: je eine Ansicht von Varianten eines Elements des ersten Teils der erfindungsgemäßen Vorrichtung.

Der erste Teil der erfindungsgemäßen Vorrichtung besteht aus einer rohrförmigen Buchse 5. Die Bohrung 6 dieser Buchse ist vorzugsweise nicht gleichförmig über die ganze Länge der Buchse ausgestaltet, sondern besitzt einige schmälere Abschnitte 7 und 8 mit einem etwas kleineren Durchmesser, so daß das in die Bohrung 6 eingesetzte zweite Teil nur an einigen Stellen, nämlich an den Abschnitten 7 und 8, geführt ist. Dies erleichtert einerseits die Herstellung, andererseits aber auch die Montage und Demontage. Die Abschnitte mit größerem Innendurchmesser sind mit 25 und 26 bezeichnet.

Auf der Sichtseite ist die Buchse 5 mit einem kreisförmigen Schild 9 versehen, das gewölbt ausgebildet ist und die Bohrung 10 in der Wand 11 gut abgedeckt.

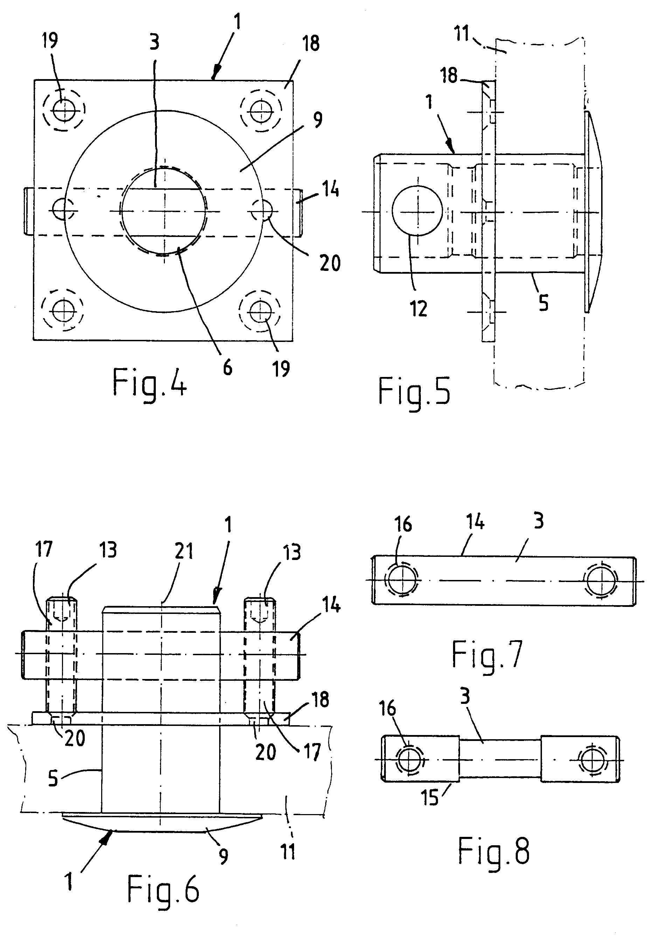

Die Buchse 5 besitzt im Abschnitt 25 ferner eine Querbohrung 12, in die bei der Montage die Bolzen 14 (Fig. 7) oder 15 (Fig. 8) eingesetzt werden, derart, daß diese Bolzen 14 und 15 mit ihren Enden über den Außenumfang der Buchse 5 ausreichend weit vorstehen.

Wie insbesondere aus der Fig. 6 deutlich wird, sind in die Schraubbohrungen 16 der Bolzen 14 oder auch 15 Gewindebolzen 17 eingeschraubt. Diese Gewindebolzen besitzen je einen Innensechskant 13, können also in Längsrichtung der Buchse 5 verstellt werden. Mit ihren gegen die Wand gerichteten Enden, drücken die Gewindebolzen 17 gegen eine vorzugsweise quadratische Platte 18. Diese Platte ist auf der Buchse 5 verschiebbar und es ist klar, daß mittels dieser Platte 18 und den Gewindebolzen 17, der erste Vorrichtungsteil 1 in der Bohrung 10 an der Wand 11 fixiert werden kann. Die Platte 18 besitzt ferner einige Befestigungsöffnungen 19, um die Platte 18 verdrehsicher an der Wand zu befestigen. Da die Platte 18 auch Ausnehmungen 20 in den Gewindebolzen 18 aufweist, wird auch eine Sicherung gegen ein Verdrehen des Teils 1 um die Mittelachse 21 erreicht.

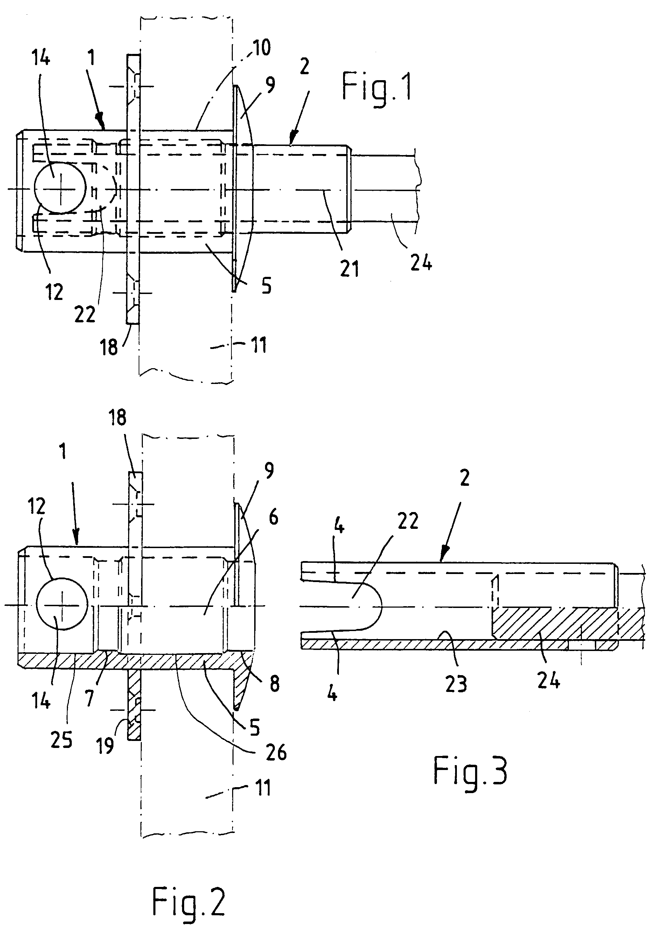

In dem so befestigten Teil 1 wird nun der Teil 2 (siehe Fig. 3) eingeschoben. Dieser Teil 2 ist vorzugsweise rohrförmig gestaltet und besitzt am inneren Ende eine keilförmige Ausnehmung 22. Der Öffnungswinkel des Keils beträgt ca. 5° und ist dem Durchmesser der Bolzen 14 bzw. 15, also der Gegenfläche 3 angepaßt, soweit sich die entsprechenden Abschnitte dieser Bolzen 14 oder 15 im Inneren der Bohrung 6 erstrecken.

Der Teil 2 nimmt in seiner Bohrung 23 beispielsweise das Ende einer Halterung 24 auf, die ihrerseits beispielsweise die Tragstange für Kleiderbügel bildet.

Wenn nun das Teil 2 aus der Stellung der Fig. 3 in das Teil 1 eingeschoben wird, so daß die Stellung nach Fig. 1 erhalten wird, klemmt sich die keilförmige Ausnehmung 22 am Umfang der Bolzen 14 bzw. 15 fest, da die Keilverbindung selbsthemmend gestaltet ist.

Je nach der Kraft, mit der die Befestigung erfolgt, ist die Kraft zu bestimmen, um das Teil 2 aus der Bohrung 6 zu entfernen. Die Befestigung bzw. Lösung des Teils 2 in Teil 1 kann beispielsweise durch ein Schlagen mit der Hand oder auch mit einem Gummihammer erfolgen. Dadurch läßt sich leicht erreichen, daß ein unbeabsichtigtes Lösen ausgeschlossen ist, aber auch, daß eine Beschädigung beim Zusammenfügen oder Trennen ausgeschlossen ist. Die Verbindung der Teile 1 und 2 ist insbesondere auch verdrehsicher.

Im gezeigten Ausführungsbeispiel ist die Ausnehmung 22 als Keilschlitz gebildet. Die Keilflächen 4 sind also einander zugewandt. Es ist aber auch möglich, mit nur einer Keilfläche auszukommen, so daß das innere Ende des Teiles 2 dann zwischen dem Querbolzen 14 oder 15 und einer Innenfläche des Teils 1 festgeklemmt wird. Bei einer Variante kann auch ein Keil am Teil 2 in eine Öffnung, z. B. zwischen zwei parallelen Querbolzen, in Teil 1 eingreifen.

Wenn auch die Anordnung des Keils am Teil 2 zu bevorzugen ist, der mit einem Gegenstück, nämlich dem Bolzen 14 oder 15, zusammenwirkt, so ist doch auch die umgekehrte Anordnung möglich, nämlich eine Keilanordnung am inneren Ende des Teils 1 anzuordnen, die in den Teil 2 beispielsweise zungenartig eingreift.

Der Teil 2 kann einstückig mit der Halterung, die beispielsweise Kleiderbügel oder dergleichen trägt, ausgebildet sein. Besser ist jedoch die zweiteilige Ausgestaltung und nachträgliche Verbindung, da dann die Befestigungsvorrichtungen gleichartig gestaltet und für eine Vielzahl von Halterungsausbildungen verwendbar sind.

Das Festklemmen an einer Wand, eines Möbelstückes, eines Regals oder dergleichen, erfolgt vorzugsweise, wie in den Zeichnungen gezeigt, unter Verwendung der Bolzen 14 oder 15. Notwendig ist dies für die Erfindung jedoch nicht. Die Befestigung des Teils 1 könnte auch mittels eines Außengewindes und einer Mutter mit unterlegter Platte erfolgen. Bei einer anderen Variante, wären Zugschrauben zwischen dem Schild 9 und der Platte 18 vorzusehen. Bei der gezeigten oder beschriebenen Befestigungsanordnung wird aber der Vorteil erhalten, daß die Belastungen vom Teil 2 über die Bolzen 14 bzw. 15 sowie die Gewindebolzen 17 unmittelbar in die Wand 11 geleitet werden, so daß die Belastung der Wand durch den Teil 1 gering bleibt.

Es ist klar, daß bei der Erfindung, wegen der keilförmigen Ausgestaltung der Ausnehmung 22, die Eindringtiefe des Teils 2 in den Teil 1 in Grenzen veränderbar ist. Bei höherer Klemmkraft wird die Eindringtiefe etwas größer sein, als bei geringerer Klemmkraft. Dies ist aber ohne Bedeutung und beeinträchtigt nicht die volle Funktionsfähigkeit der beschriebenen Vorrichtung.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Vorrichtung zur Befestigung von Wandhalterungen, im wesentlichen bestehend aus zwei Teilen (1,2), wobei der erste Teil (1) in einer Bohrung (10) der Wand (11) fixiert ist und der zweite Teil (2) klemmend aber lösbar in einer Ausnehmung (6) des ersten Teils (1) gehalten ist und die Halterung (24) trägt, **dadurch gekennzeichnet, daß** zwischen den beiden Teilen (1,2) eine selbsthemmende Keilverbindung (3,4) vorgesehen ist, wobei an dem einem Teil (2) mindestens eine Keilfläche (4) angeordnet ist, die sich an einer Gegenfläche (3) des anderen Teils (1) verklemmt und wobei der erste Teil (1) beim Klemmvorgang in seinen Außenabmessungen im wesentlichen unverformt bleibt.

2. Vorrichtung nach Anspruch 1, **dadurch gekennzeichnet, daß** die Keilfläche (4) durch die Innenfläche einer U-förmigen Ausnehmung (22) an dem Teil (2) gebildet ist, die mit einem Querbolzen (14) am anderen Teil (1) zusammenwirkt.

3. Vorrichtung nach einem oder beiden der vorhergehenden Ansprüche, **dadurch gekennzeichnet, daß** der in die Ausnehmung (6) des ersten Teils (1) einsteckbare zweite Teil (2) rohrförmig gestaltet ist.

4. Vorrichtung nach einem oder mehreren der vorhergehenden Ansprüche, **dadurch gekennzeichnet, daß** die Keilfläche (4) am zweiten Teil (2) und die Gegenfläche (3) am ersten Teil (1) angeordnet ist.

5. Vorrichtung nach einem oder mehreren der vorhergehenden Ansprüche, **dadurch gekennzeichnet, daß** der erste Teil (1) am Einsteckende ein Schild (9) aufweist, das zur Befestigung des ersten Teils in der Wand (11) mit einer Befestigungsplatte (18) zusammenwirkt, die zur Montage auf dem ersten Teil (1) verschiebbar ist.

6. Vorrichtung nach einem oder mehreren der vorhergehenden Ansprüche, **dadurch gekennzeichnet, daß** das Schild (9) einstückig mit dem ersten Teil (1) ausgebildet ist.

7. Vorrichtung nach einem oder mehreren der vorhergehenden Ansprüche, **dadurch gekennzeichnet, daß** der Querbolzen (14) mit seinen Enden aus dem ersten Teil (1) herausragt um eine Abstützung für die Befestigungsplatte (18) zu bilden.

8. Vorrichtung nach einem oder mehreren der vorhergehenden Ansprüche, **gekennzeichnet durch** Gewindebolzen (17), die sich zwischen dem Querbolzen (14) und der Befestigungsplatte (18) erstrecken.

9. Vorrichtung nach einem oder mehreren der vorhergehenden Ansprüche, **dadurch gekennzeichnet, daß** die Ausnehmung (6) im ersten Teil (1) als Bohrung gestaltet ist und einige Abschnitte (7,8) mit geringerem, dem zweiten Teil (2) angepaßten Durchmessern aufweist.

10. Vorrichtung nach einem oder mehreren der vorhergehenden Ansprüche, **dadurch gekennzeichnet, daß** der Querbolzen (14) mit der Gegenfläche (3) in einem Abschnitt (25) der Innenbohrung des ersten Teils (1) mit dem größeren Durchmesser angeordnet ist.
